# EUROPÄISCHE PATENTANMELDUNG

(11) **EP 4 494 781 A1**
(43) Veröffentlichungstag der Anmeldung: **22.01.2025**
(21) Anmeldenummer: 24188910.4
(22) Anmeldetag: 16.07.2024
(51) Int. Cl.: B22C 9/10, B22C 9/22, B22D 17/24, B29C 33/76, B29C 33/48, B29C 45/44

(54) **TECHNIK ZUR HERSTELLUNG VON GUSS-FORMTEILEN**

(30) Priorität: 17.07.2023 DE 102023118844
(71) Anmelder: Gealan Formteile GmbH, 95145 Oberkotzau (DE)
(72) Erfinder: Müller, Lutz, Oberkotzau (DE); Gerstner, Woldemar, Oberkotzau (DE)
(74) Vertreter: Fleuchaus & Gallo Partnerschaft mbB

(57) **Zusammenfassung**

Die Erfindung betrifft eine Technik zur Herstellung eines Formteils mittels eines teilbaren Gusswerkzeugs. Das Gusswerkzeug bildet im zusammengesetzten Zustand eine Gusskavität mit einem Vorsprung. Das Gusswerkzeug umfasst mindestens eine Matrize, die eine Außengeometrie des Formteils definiert, und einen ersten Formkern (42), welcher eine hohle Innengeometrie des Formteils definiert. Der erste Formkern (42) ist zumindest teilweise linear entlang einer Ausrückachse relativ zu dem hergestellten Formteil aus der hohlen Innengeometrie ausrückbar. Eine Mantelfläche des ersten Formkerns weist zumindest eine erste Mantelteilfläche (216) mit einer Konizität mit einem ersten Winkel größer als null Grad, α>0°, relativ zu der Ausrückachse auf. Das Gusswerkzeug ist dadurch gekennzeichnet, dass die Mantelfläche des ersten Formkerns (42) stückweise distal anschließend an die erste Mantelteilfläche (216) eine zweite Mantelteilfläche (218) mit einem zweiten Winkel größer oder gleich null Grad und kleiner als der erste Winkel, 0°≤β<α, relativ zu der Ausrückachse aufweist. Die zweite Mantelteilfläche (218) definiert den Vorsprung der Gusskavität.

## Beschreibung

Die vorliegende Erfindung betrifft ein teilbares Gusswerkzeug zur Herstellung eines Formteils, ein Gussverfahren zum Herstellen eines Formteils, ein Formteil und ein System umfassend ein Formteil und ein in einer hohlen Innengeometrie des Formteils aufgenommenes weiteres Objekt.

Gießen, wie beispielsweise Spritzgießen, unter Verwendung von einem Gusswerkzeug, insbesondere einem Spritzgusswerkzeug, ermöglicht die Herstellung von Formteilen, wie beispielsweise Ventilgehäusen, in großen Stückzahlen.

Im Stand der Technik finden sich viele Körper mit Dichtungen, welche relativ gegen einen zweiten Körper bewegt werden, wobei die Dichtung zwischen den beiden Körpern verpresst wird. In beiden Körpern, beispielsweise in Ventilgehäusen und darin angeordneten Ventileinsätzen, sind häufig Öffnungen integriert, um einen Strömungsweg für ein Medium zu ermöglichen.

Die Kanten der Öffnung bewegen sich dabei konventionellerweise über die Dichtung. Eine unverrundete Kante bildet dabei eine hohe Gefahr bei einer relativen Bewegung zwischen den beiden Körpern, die Dichtung zu verletzen. Beispielsweise führt eine scharfe Kante, über die sich ein Dichtring bewegt, wenn ein Ventileinsatz rotiert, zu einem hohen Beschädigungsrisiko der Dichtung.

Deshalb wird im Stand der Technik eine verrundete Kante der Öffnung im Ventilgehäuse, worübersich die Dichtung bewegt, bevorzugt, um einer Verletzungsgefahr der Dichtung entgegenzuwirken.

Verrundungen und/oder Fasen an den Öffnungen werden konventionellerweise durch abnehmende Bearbeitung hergestellt. In Gussverfahren, insbesondere Spritzgussverfahren, müssen Rundungen und/oder Fasen an den Öffnungen, über welche sich die Dichtung bewegt, herkömmlicherweise unter Verwendung aufwendig gestaltete Faltkerne und Schiebermechaniken entformt werden.

Obgleich dies zu deutlichen Verbesserungen hinsichtlich der Problematik der Verletzungsgefahr für relativ über diese Bereiche bewegte Dichtungen führt, erhöht sich der Aufwand für die Herstellung und den Betrieb dieser komplexen Werkzeuge erheblich und darüber hinaus auch die Zykluszeit bei der Herstellung solcher Teile. Zudem können bei der Verwendung von Faltkernen Trenngrate aufgrund der einzelnen Segmente des Faltkerns entstehen, die ebenfalls zu einer Verletzungsgefahr für bewegte Dichtungen führen können.

Vor diesem Hintergrund hat die vorliegende Erfindung zur Aufgabe, eine Technik zur Herstellung von Guss-Formteilen bereitzustellen, die eine effizientere Fertigung ermöglicht und aufwendige Entformungstechniken vermeidet. Insbesondere hat die vorliegende Erfindung auch die Aufgabe, ein Gusswerkzeug zur Herstellung eines Formteils, ein Gussverfahren zum Herstellen eines Formteils und ein Formteil bereitzustellen, bei denen ein Schutz der Weichkomponente durch die Ausbildung einer Rundung oder Fase an Rändern eines Hinterschnitts vorgesehen ist.

Diese und weitere Aufgaben werden durch das teilbare Gusswerkzeug gemäß dem unabhängigen Anspruch 1, dem Gussverfahren gemäß Anspruch 5, ein Formteil gemäß Ansprüche und ein System gemäß Anspruch 11 gelöst. Ausführungsformen und Weiterbildungen des teilbaren Gusswerkzeugs, des Formteils und des Systems sind Gegenstand der jeweiligen abhängigen Ansprüche.

Gemäß einem ersten Vorrichtungsaspekt wird ein teilbares Gusswerkzeug zur Herstellung eines Formteils bereitgestellt. Das teilbare Gusswerkzeug (kurz: das Gusswerkzeug) bildet in einem zusammengesetzten Zustand wenigstens eine Gusskavität, aufweisend zumindest einen Vorsprung. Das Gusswerkzeug umfasst mindestens eine Matrize. Die mindestens eine Matrize ist dazu ausgebildet, eine Außengeometrie des Formteils im zusammengesetzten Zustand des Gusswerkzeugs zu definieren. Das Gusswerkzeug umfasst ferner einen ersten Formkern. Der erste Formkern ist dazu ausgebildet, eine hohle Innengeometrie des Formteils im zusammengesetzten Zustand des teilbaren Gusswerkzeugs zumindest teilweise zu definieren.

Der erste Formkern ist zumindest teilweise im Wesentlichen linear entlang einer Ausrückachse relativ zu dem hergestellten Formteil aus der hohlen Innengeometrie ausrückbar. Eine Mantelfläche des ersten Formkerns weist im zusammengesetzten Zustand des Gusswerkzeugs eine erste Mantelteilfläche (auch: Teilmantelfläche) mit einer Konizität mit einem ersten Winkel größer als null Grad (α>0°) relativ zu der Ausrückachse auf.

Das erfindungsgemäße teilbare Gusswerkzeug ist dadurch gekennzeichnet, dass die Mantelfläche des ersten Formkerns stückweise im zusammengesetzten Zustand distal anschließend an die erste Mantelteilfläche zumindest eine zweite Mantelteilfläche (insbesondere mit einer Konizität) mit zumindest einem zweiten Winkel größer oder gleich null Grad (β≥0°) relativ zu der Ausrückachse aufweist. Der zweite Winkel ist kleiner als der erste Winkel (β<α). Die zumindest eine zweite Mantelteilfläche definiert den zumindest einen Vorsprung der wenigstens einen Gusskavität im zusammengesetzten Zustand des Gusswerkzeugs.

Mittels der erfindungsgemäßen Technik, in der der erfindungsgemäße erste Formkern zum Gießen eines zumindest teilweise hohlen Formteils einsetzbar ist, kann eine scharfe Kante (auch: Grat) am Rand der mindestens einen vordefinierten Ausnehmung des Formteils vermieden werden, indem ein Gusswerkzeug zur Verfügung gestellt wird, welches eine vereinfachte Entformung des Formteils ohne die Verwendung von komplizierten Formkernen ermöglicht und gleichzeitig Ausnehmungen an der Innengeometrie des Formteils bereitstellt, die eine Fase oder Rundung an dem Teil der Ausnehmung vorsieht, in welchem eine relativ über diese Bereiche bewegte Dichtungen verschoben wird.

Dadurch kann eine Massenproduktion des Formteils erheblich vereinfacht und beschleunigt werden. Insbesondere kann auf eine Nachbearbeitung des Formteils zum Entfernen oder Abmildern der scharfen Kanten oder Grate verzichtet werden.

Der erste Formkern kann ein Schieber sein.

Das teilbare Gusswerkzeug kann mindestens ein weiteres Element umfassen, welches relativ in Bezug auf die Matrize verschiebbar ist und diese beiden Elemente derart zusammenschiebbar sind, um die Außengeometrie des Formteils (auch: Guss-Formteil) zu definieren.

Die Ausrückrichtung (auch: Schieberichtung, Zugrichtung, Entformungsrichtung oder axiale Richtung) kann ein distales Ende und ein proximales Ende des ersten Formkerns definieren. Ein Formkern kann beispielsweise mittels einer am proximalen Ende angeordneten Konstruktion in die mindestens eine Matrize, welche die Außengeometrie des Formteils im zusammengesetzten Zustand des Gusswerkzeugs definiert, verschiebbar bzw. aus dem gegossenen Formteil ausrückbar sein. Das distale Ende des Formkerns kann eine Abschlussfläche umfassen. Durch das distale Ende bzw. die Abschlussfläche kann eine Endposition des Formkerns im zusammengesetzten Zustand des Gusswerkzeugs definiert sein. Der zusammengesetzte Zustand kann eine Gussform zum Herstellen des Formteils definieren.

Die Konizität der ersten Mantelteilfläche kann sehr gering sein, beispielsweise mit einem Winkel kleiner als 10°, bevorzugt mit einem Winkel kleiner als 2,5°.

Der erste Formkern kann annähernd zylinderförmig sein mit einer nur geringen Verjüngung vom proximalen zum distalen Ende.

Die Ausrückachse erstreckt sich zumindest teilweise im wesentlichen linear. Dies umfasst sowohl im wesentlichen vollständig lineare Ausrückbewegungen des Formkerns als auch Ausrückbewegungen auf einer Kurvenlinie, welche allerdings eine verhältnismäßig geringe Krümmung aufweist, so dass die Ausrückbewegung zwar in vollständiger Betrachtungsweise zwischen ihrer Start- und Endposition als einer nicht linearen Trajektorie folgend beschreibbar ist, jedoch in näherer Betrachtungsweise aus einerVielzahl von kurzen weitgehend linear verlaufenden Teilbewegungen angesehen werden kann, z.B. einer Bewegung auf einer Kreislinie großen Radiuses folgt, oder aber einer Schraubenlinie mit nur sehr geringer Exzentrität und sehr großer Steigung.

Die erste Mantelteilfläche mit dem ersten Winkel α kann sich vom proximalen Ende des ersten Formkerns bis zu einer Anschlusslinie (die z.B. quer zur Ausrückachse angeordnet sein kann im zusammengesetzten Zustand) erstrecken, an die sich in distale Richtung die zumindest eine zweite Mantelteilfläche mit dem zweiten Winkel zumindest ein Stück weit erstreckt. Durch die zumindest eine zweite Mantelteilfläche kann der zumindest eine Vorsprung des ersten Formkerns definiert sein.

Jede Mantelteilfläche kann in Ausrückrichtung begrenzt sein und/oder kann quer zur Ausrückrichtung begrenzt sein. Beispielsweise kann die mindestens eine zweite Mantelteilfläche näherungsweise rechteckig sein mit einer Seitenrichtung parallel und der anderen Seitenrichtung quer zur Ausrückrichtung.

Der zumindest eine Vorsprung kann in einem Ausführungsbeispiel genau ein Vorsprung sein. In weiteren Ausführungsbeispielen kann der zumindest eine Vorsprung zwei oder mehr Vorsprünge umfassen. Beispielsweise können zwei oder mehrVorsprünge bei einem ersten Formkern, welcher großteils rotationssymmetrisch um die Ausrückachse ist, so angeordnet sein, dass sie identische Abstände zum proximalen Ende und zum distalen Ende des ersten Formteils haben. Anders ausgedrückt können die Vorsprünge beispielsweise annähernd rotationssymmetrisch um die Ausrückachse oder relativ um die Ausrückachse rotiert angeordnet sein.

Der zumindest eine Vorsprung kann im zusammengesetzten Zustand des Gusswerkzeugs zumindest eine Ausnehmung in dem herstellbaren Formteil definieren. Die zumindest eine Ausnehmung kann eine oder mehrere Durchgangsöffnungen umfassen, durch die ein Fluid (wie Gas oder eine Flüssigkeit) ableitbar und/oder zuleitbar ist.

Die Durchgangsöffnung kann durch Verwendung eines zweiten Formkerns herstellbar sein. Die entsprechende Ausnehmung kann breiter als die Durchgangsöffnung sein und scharfe Kanten an den Rändern der Innenfläche des Formteils vermeiden. Beispielsweise können Dichtungen oder andere Weichkomponenten zwischen dem gegossenen Formteil und einem in dem Formteil angeordneten weiteren Objekt so verpresst sein, dass sie bei vorbestimmten relativen Stellungen des weiteren Objekts zum Formteil eine entstehende Durchgangsöffnung (insbesondere seitlich) abdichten.

Damit der Formkern nach dem Gießen entfernbar ist, ohne dass das Formteil beschädigt wird, muss sich die Außengeometrie des Formkerns vom proximalen zum distalen Ende hin stetig verkleinern (auch: verjüngen), wobei Teilbereiche gleichbleibender Außengeometrie-also ohne eine Verjüngung-vorliegen können, das heißt, dass in einigen Ausführungsbeispielen die Außengeometrie des Formkerns zwischen sich verkleinernden Abschnitten stückweise eine konstante Ausdehnung bzw. Breite aufweisen kann. Ein Verbreitern ist jedoch ausgeschlossen, da hierdurch die Entformbarkeit beeinträchtigt würde. Dieses sich stetige Verjüngen (optional mit stückweise konstanten Ausdehnungen) kann als Konizität der Mantelfläche oder Mantelteilfläche mit einem Winkel größer als null Grad bezeichnet werden.

Ein Beispiel einer konischen Geometrie kann eine rotationssymmetrische, sich stetig im Radius (bzw. Durchmesser) zum distalen Ende hin verkleinernde Mantelfläche des ersten Formkerns (und/oder Innenfläche des Formteils) aufweisen.

Die Mantelfläche des ersten Formkerns bzw. die Innenfläche des herstellbaren Formteils ist nicht notwendigerweise rotationssymmetrisch. Beispielsweise kann die Geometrie des Formkerns im Querschnitt ein Vieleck (z.B. ein Rechteck, Fünfeck, Sechseck) oder oval sein. Der Querschnitt kann senkrecht zur Ausrückachse sein.

Die hohle Innengeometrie des Formteils kann ein Positiv zu der Außengeometrie des Formkerns als Negativ sein (oder umgekehrt).

Das distale Anschließen der zumindest einen zweiten Mantelteilfläche an die erste Mantelteilfläche kann bedeuten, dass die erste Mantelteilfläche relativ in Richtung des proximalen Endes des ersten Formkerns angeordnet ist und die zumindest eine zweite Mantelteilfläche relativ in Richtung des distalen Endes des ersten Formkerns.

Der distale Anschluss der zumindest einen zweiten Mantelteilfläche an die erste Mantelteilfläche kann so gewählt sein, dass der entsprechende Anschluss der mindestens einen zweiten Innenteilfläche an die erste Innenteilfläche des Formteils in proximaler Richtung von einer Durchgangsöffnung versetzt ist. Dadurch kann ein Hineinragen von einer scharfen Kante in die hohle Innengeometrie (z.B. zumindest bis zu einer virtuellen Verlängerung der ersten Innenteilfläche) des Formteils vermieden werden.

Die mindestens eine zweite Innenteilfläche des Formteils bzw. die mindestens eine zweite Mantelfläche des ersten Formkerns kann sich in distale Richtung über eine Durchgangsöffnung hinaus erstrecken. Dies hat den Vorteil, dass eine Abschlussfläche des zweiten Formkerns, der die Wände der Durchgangsöffnung definiert, eine einfache Geometrie hat.

In einem alternativen Ausführungsbeispiel kann sich die mindestens eine zweite Innenteilfläche des Formteils bzw. die mindestens eine zweite Mantelfläche des ersten Formkerns in distale Richtung nur bis zu einem distalen Anschluss an mindestens eine dritte Mantelfläche erstrecken, wobei dieser distale Anschluss im Bereich der Durchgangsöffnung liegt. Dies hat den Vorteil, dass der dritte Winkel γ kleiner gewählt und so weitere scharfe Kanten vermieden werden können. Gleichzeitig muss die eine Abschlussfläche des zweiten Formkerns eine komplexe Geometrie mit einem "Knick" haben.

Der dritte Winkel γ kann kleiner sein als ein rechter Winkel, γ< 90°.

Der Mantelteilflächen des ersten Formkerns können eine Breite quer zur Ausrückachse und eine Länge parallel zur Ausrückachse umfassen. Die Breite kann über die Länge hin so veränderbar sein, dass ein Herausziehen des ersten Formkerns nach einem Gießen noch möglich ist. Beispielsweise kann die Breite einer (insbesondere der zumindest einen zweiten) Mantelteilfläche jeweils vom proximalen zum distalen Ende abnehmen.

Das Formteil mit der hohlen Innengeometrie kann ausgelegt sein zum Aufnehmen eines weiteren Objekts (beispielsweise eines weiteren Formteils), welches relativ zum Formteil bewegbar ist.

Das weitere Objekt (z.B. das weitere Formteil) kann eine oder mehrere Weichkomponenten aufweisen, die an Außengeometrie des weiteren Objekts angeordnet sind. Durch das Vermeiden der scharfen Kante an einer Kontaktstelle des Formteils kann ein vorzeitiger Verschleiß und Beschädigungen des weiteren Objekts, insbesondere der an dem weiteren Objekt angeordneten Weichkomponenten, durch Reibungen an der scharfen Kante vermieden werden.

Die relative Bewegung zwischen dem Formteil und dem weiteren Objekt kann eine rotatorische Bewegung sein. Beispielsweise kann die Ausrückachse des Formkerns im Wesentlichen parallel sein zu einer Rotationsachse des innerhalb des Formteils angeordneten weiteren Objekts.

In einer weiteren Ausführungsform kann die relative Bewegung eine translatorische Bewegung sein.

In einer noch weiteren Ausführungsform können eine rotatorische Bewegung und eine translatorische Bewegung miteinander kombiniert sein.

Das Formteil kann eine Ventilhülse sein. Das weitere Objekt kann ein Ventileinsatz sein. DerVentileinsatz kann drehbar (auch: rotierbar) in der Ventilhülse angeordnet sein. Die Weichkomponente kann beispielsweise eine Dichtung, wie beispielsweise ein Dichtungsring, sein. Die Dichtung kann bei Drehung des Ventileinsatzes an der Ventilhülse entlang bewegt werden.

Das Formteil, und optional das weitere Objekt, können mittels eines Spritzgussverfahrens und/oder aus Kunststoff hergestellt sein.

Die Außengeometrie des ersten Formkerns kann im Bereich einer im Formteil vorgesehenen Durchgangsöffnung bzw. als zumindest eine Ausnehmung (z.B. formschlüssig) zu einer Außengeometrie eines zweiten Formkerns passen. Der zweite Formkern kann beim Guss des Formteils zum Ausformen der Durchgangsöffnung dienen.

In einem Ausführungsbeispiel kann die mindestens eine vordefinierte Ausnehmung lediglich eine flache, nicht durchgehend geöffnete Ausnehmung (auch: Zwischentasche) umfassen. Die Zwischentasche kann z.B. zur Kennzeichnung einer Ruheposition (auch: Parkposition) des weiteren Objekts geeignet sein. Beispielsweise kann in der Ruheposition ein Ventil geschlossen sein.

Eine nicht durchgehend geöffnete Ausnehmung kann auch als Zwischentasche ohne Einlass und/oder Auslass bezeichnet werden.

Der erste Formkern kann in Kombination mit unterschiedlichen Matrizen mit und ohne Öffnungen sowie mit oder ohne entsprechenden zweiten Formkern eingesetzt werden. Dadurch kann ein erster Formkern für das Gießen verschiedener, in einer hohlen Innengeometrie im Wesentlichen übereinstimmender Formteile verwendet werden.

Der erste Winkel α kann ein kleiner (auch: spitzer) Winkel sein, beispielsweise zwischen 1 Grad und 5 Grad.

Der zweite Winkel β kann kleiner (auch: spitzer) sein als der erste Winkel α.. Beispielsweise kann der zweite Winkel β zwischen 0,1 Grad und 1 Grad betragen.

Beispielsweise kann der erste Winkel α in einer Ausführungsform 1 Grad betragen und der zweite Winkel β 0,2 Grad.

Der erste (und/oder zweite) Formkern kann aus Metall (z.B. Stahl) gefertigt sein.

Der erste (und/oder zweite) Formkern kann zum Herstellen einer Vielzahl formgleicher Formteile geeignet sein.

Das teilbare Gusswerkzeug kann den zweiten Formkern umfassen. Der zweite Formkern kann dazu ausgebildet sein, eine Durchgangsöffnung in der Innengeometrie des Formteils im zusammengesetzten Zustand des Gusswerkzeugs zu definieren. Eine Stirnfläche des zweiten Formkerns kann im zusammengesetzten Zustand des Gusswerkzeugs formschlüssig an einen Bereich der zumindest einen zweiten Mantelteilfläche des ersten Formkerns anschließen. Der distale Anschluss der zumindest einen zweiten Mantelteilfläche an die erste Mantelteilfläche des ersten Formkerns kann im zusammengesetzten Zustand des teilbaren Gusswerkzeugs vom formschlüssigen Anschluss der Stirnfläche des zweiten Formkerns an den Bereich der Mantelfläche des ersten Formkerns in proximale Richtung versetzt sein.

Durch die Versetzung in proximale Richtung des distalen Anschlusses der zumindest einen zweiten Mantelteilfläche an die erste Mantelteilfläche relativ zum formschlüssigen Anschluss der Stirnfläche des zweiten Formkerns an den Bereich der Mantelfläche des ersten Formkerns kann erreicht werden, dass die Kante am Übergang zur Durchgangsöffnung im herstellbaren Formteil von einer Verlängerung der ersten Mantelteilfläche nach außen hin versetzt ist. Dadurch können Beschädigungen an einer Weichkomponente, wie einer Dichtung, vermieden werden, wenn diese Weichkomponente an einem im Formteil beweglichen weiteren Objekt angeordnet ist.

Die Mantelfläche des ersten Formkerns kann distal anschließend an die zumindest eine zweite Mantelteilfläche zumindest eine dritte Mantelteilfläche (insbesondere mit einer Konizität) mit einem dritten Winkel größer als null Grad (γ>0°) relativ zu der Ausrückachse aufweisen. Der dritte Winkel kann größerer sein als der erste Winkel (γ>α).

Durch die Abfolge von zumindest einer zweiten und zumindest einer dritten Mantelteilfläche mit kleinerem bzw. größerem Winkel als dem Winkel der ersten Mantelteilfläche kann die Mantelfläche nach Abschluss des Vorsprungs im Wesentlichen zu der ursprünglichen Lage und/oder Neigung der ersten Mantelteilfläche zurückkehren.

Die Mantelfläche des ersten Formkerns kann distal anschließend an die zumindest eine dritte Mantelteilfläche eine vierte Mantelteilfläche aufweisen (insbesondere mit einer Konizität) mit einem vierten Winkel, der im Wesentlichem gleich dem ersten Winkel, δ≅α, relativ zu der Ausrückachse ist.

Die vierte Mantelteilfläche kann im Wesentlichen eine virtuelle Verlängerung der ersten Mantelteilfläche sein. Dadurch können ein oder mehrere räumlich begrenzte Vorsprünge an dem ersten Formkern bzw. Ausnehmungen (insbesondere eine oder mehrere Durchgangsöffnungen) an dem Formteil ermöglicht werden. Dabei werden scharfe Kanten vermieden. Hierdurch kann einem Verschleiß des weiteren Objekts, insbesondere seiner Weichkomponenten, weiter vorgebeugt werden. Ferner ist sichergestellt, dass der erste Formkern nach dem Gießen des Formteils leicht herausziehbar ist.

Der distale Anschluss der vierten Mantelteilfläche an die zumindest eine dritte Mantelteilfläche kann im zusammengesetzten Zustand des Gusswerkzeugs vom formschlüssigen Anschluss der Stirnfläche des zweiten Formkerns an den Bereich der Mantelfläche des ersten Formkerns in distale Richtung versetzt sein. Dadurch umfasst der Bereich der Mantelfläche des ersten Formkerns, der die Stirnfläche des zweiten Formkerns formschlüssig kontaktieren kann, nur die zumindest eine zweite Mantelteilfläche und damit eine besonders einfache Geometrie. Diese besonders einfache Geometrie entspricht der Geometrie der Stirnfläche des zweiten Formkerns.

Gemäß einem Verfahrensaspekt wird ein Gussverfahren zum Herstellen eines Formteils mit einer hohlen Innengeometrie mit mindestens einer Ausnehmung bereitgestellt. Das Gussverfahren umfasst einen Schritt des Bereitstellens mindestens einer Matrize. Die mindestens eine Matrize ist dazu ausgebildet, eine Außengeometrie des Formteils in einem zusammengesetzten Zustand eines teilbaren Gusswerkzeugs zu definieren. Das Gussverfahren umfasst ferner einen Schritt des Bereitstellens eines ersten Formkerns mit einer Mantelfläche gemäß dem ersten Vorrichtungsaspekt und optional ein Bereitstellen eines zweiten Formkerns gemäß dem ersten Vorrichtungsaspekt. Das Gussverfahren umfasst ferner einen Schritt des relativen Einrückens des ersten Formkerns, und optional ein relatives Einrücken des zweiten Formkerns, in eine Endposition innerhalb der mindestens einen Matrize, um den zusammengesetzten Zustand des teilbaren Gusswerkzeugs zur erhalten. Das Gussverfahren umfasst ferner einen Schritt des Einbringens eines Gussmaterials (beispielsweise Kunststoff) in das zusammengesetzte teilbare Gusswerkzeug. Das Gussverfahren umfasst ferner einen Schritt des Erstarren Lassens des eingebrachten Gussmaterials. Das Gussverfahren umfasst ferner einen Schritt des relativen Ausrückens des ersten Formkerns, und optional ein relatives Ausrücken des zweiten Formkerns, aus dem erstarrten Gussmaterial. Das Gussverfahren umfasst ferner einen Schritt des Entformens des erstarrten Gussmaterials aus der mindestens einen Matrize, um das hergestellte Formteil zu erhalten.

Das Gussverfahren kann ein Spritzgussverfahren oder ein Metalldruckgussverfahren sein. Vorteilhafterweise kann beim Spritzgussverfahren eine große Anzahl Formteile aus Kunststoff hergestellt werden, ohne dass das teilbare Gusswerkzeug sich merklich verformt.

Mittels des Gussverfahrens kann unter Verwendung des erfindungsgemäßen ersten Formkerns ein Formteil hergestellt werden ohne eine Notwendigkeit von Nachbearbeitungen oder Hinterschnitten im Bereich der zumindest einen Ausnehmung im Formteil, die durch den zumindest einen Vorsprung am ersten Formkern definiert ist. Dadurch kann das Formteil schneller und effizienter mit weniger Werkzeug als herkömmlicherweise hergestellt werden.

Das Formteil kann ein Kunststoffobjekt sein. Dadurch kann das Formteil besonders leicht sein.

Beim Spritzgussverfahren kann das Gussmaterial (z.B. der Kunststoff) bei einer sehr hohen Temperatur in die Gussform in einem flüssigen Zustand gespritzt werden. Das Erstarren des Gussmaterials kann ein Erkalten des Gussmaterials (z.B. des Kunstoffs) umfassen.

Die mindestens eine Matrize und der erste (und/oder zweite) Formkern können aus einem beliebigen Material (z.B. Metall) hergestellt sein, welches eine höhere Schmelztemperatur als die Gusstemperatur des Spritzgussverfahrens hat.

Durch die Durchgangsöffnung, die mittels des zweiten Formkerns und der entsprechenden Öffnung in der mindestens einen Matrize definiert wird, kann das Formteil zum Durchleiten von Fluiden geeignet sein. Beispielsweise kann ein Gas von der Durchgangsöffnung in der Innenfläche des Formteils (z.B. durch ein weiteres eingesetztes Objekt) zum proximalen Ende des Formteils geleitet werden.

Gemäß einem zweiten Vorrichtungsaspekt wird ein Formteil mit zumindest einer Ausnehmung bereitgestellt. Das Formteil umfasst eine Außengeometrie und eine hohle Innengeometrie. Die hohle Innengeometrie weist eine Innenfläche auf. Die Innenfläche weist eine erste Innenteilfläche (auch: Teilinnenfläche) mit einer ersten Konizität mit einem ersten Winkel größer als null Grad (α>0°) relativ zu einer Ausrückachse auf. Die Ausrückachse ist durch eine relative Ausrückbarkeit eines ersten Formkerns (beispielsweise gemäß dem ersten Vorrichtungsaspekt) definiert.

Das Formteil des zweiten Vorrichtungsaspekts ist dadurch gekennzeichnet, dass die Innenfläche des Formteils stückweise distal anschließend an die erste Innenteilfläche zumindest eine zweite Innenteilfläche (insbesondere mit einer Konizität) mit einem zweiten Winkel größer oder gleich null Grad (β≥0°) relativ zu der Ausrückachse aufweist. Der zweite Winkel ist kleiner als der erste Winkel (β<α). Die zumindest eine zweite Innenteilfläche definiert die zumindest eine Ausnehmung.

Dadurch, dass der erste und der zweite Winkel größer als null sind, ist sichergestellt, dass ein zum Herstellen des Formteils verwendeter erster Formkern nach dem Gießen problemlos entfernbar ist.

Die zumindest eine Ausnehmung des Formteils kann eine Durchgangsöffnung sein bzw. umfassen. Der distale Anschluss der zumindest einen zweiten Innenteilfläche an die erste Innenteilfläche kann von der Durchgangsöffnung in proximale Richtung versetzt sein. Dadurch kann eine scharfe Kante vom Übergang der Innenfläche des Formteils zur Durchgangsöffnung vermieden werden, an der Weichkomponenten (beispielsweise Dichtungen) reiben und somit schnell verschleißen könnten.

Die Innenfläche des Formteils kann distal anschließend an die zumindest eine zweite Innenteilfläche zumindest eine dritte Innenteilfläche (insbesondere mit einer Konizität) mit einem dritten Winkel größer als null Grad (γ>0°) relativ zu der Ausrückachse aufweisen. Der dritte Winkel kann größerer sein als der erste Winkel (γ>α). Dadurch kann die Geometrie der Innenfläche in distale Richtung des Formteils auf eine virtuelle Verlängerung der ersten Innenteilfläche zurückgeführt werden.

Die Innenfläche des Formteils kann distal anschließend an die zumindest eine dritte Innenteilfläche eine vierte Innenteilfläche (insbesondere mit einer Konizität) mit einem vierten Winkel aufweisen, der im Wesentlichem gleich dem ersten Winkel δ≅α) relativ zu der Ausrückachse ist. Die vierte Innenteilfläche kann im Wesentlichen eine virtuelle Verlängerung der ersten Innenteilfläche bilden. Beispielsweise kann das Formteil außer einem räumlich begrenzten Bereich der zumindest einen Ausnehmung eine konische Innengeometrie aufweisen.

Der distale Anschluss der vierten Innenteilfläche an die zumindest eine dritte Innenteilfläche kann von der Durchgangsöffnung in distale Richtung versetzt sein. Dadurch kann ein geometrisch besonders einfacher zweiter Formkern zur Herstellung des Formteils verwendet werden.

Das Formteil kann mittels des Gussverfahrens gemäß dem Verfahrensaspekt hergestellt sein.

Gemäß einem Systemaspekt wird ein System bereitgestellt. Das System umfasst ein Formteil gemäß dem zweiten Vorrichtungsaspekt. Das System umfasst ferner ein weiteres Objekt, welches innerhalb der hohlen Innengeometrie des Formteils aufgenommen ist. Das weitere Objekt ist insbesondere innerhalb der hohlen Innengeometrie des Formteils beweglich aufgenommen.

Das weitere Objekt kann eine Mantelteilfläche mit einer Konizität mit dem ersten Winkel relativ zu der Ausrückachse aufweisen.

Das weitere Objekt kann rotatorisch (und/oder translatorisch) beweglich in dem Formteil angeordnet sein. Je nach Stellung des weiteren Objekts kann das System beispielsweise einen Fluiddurchlass ermöglichen oder nicht.

An dem weiteren Objekt können Weichkomponenten angeordnet sein, die zwischen dem weiteren Objekt und dem Formteil verpresst sind.

Die Weichkomponenten können im Bereich der zumindest einen zweiten (und in einigen Ausführungsbeispielen der zumindest einen dritten) Innenteilfläche des Formteils verpresst sein, zumindest bei vorbestimmten relativen Positionierungen des weiteren Objekts zum Formteil. Dadurch kann eine Reibung zwischen dem Formteil und einem harten Material des weiteren Objekts und somit Verschleiß von harten Objekten vermieden werden.

Ferner kann durch die verpressten Weichkomponenten eine Fluid-Dichtigkeit zwischen dem Formteil und dem weiteren Objekt erreicht werden, zumindest bei den vorbestimmten relativen Positionierungen.

Das weitere Objekt kann mindestens eine Öffnung aufweisen, die in mindestens einer Positionierung relativ zum Formteil an zumindest eine der mindestens einen Ausnehmung, insbesondere an eine Durchgangsöffnung, anschließt. Dadurch kann das System je nach Stellung des weiteren Objekts eine Durchgangsöffnung (auch: einen Strömungsweg für ein Fluid) aufweisen oder auch nicht.

Das Formteil kann ein Ventilgehäuse sein, das weitere Objekt kann ein Ventileinsatz sein, und optional können ferner die Weichkomponenten Dichtungselemente sein.

Die Dichtungselemente können in einer oder mehreren Nuten des weiteren Objekts angeordnet sein.

Weitere Merkmale der Erfindung ergeben sich aus der nachfolgenden detaillierten Beschreibung von Ausführungsformen der Erfindung in Verbindung mit den Zeichnungen und den Ansprüchen.

Es zeigen:
Fig. 1 ein Ausführungsbeispiel eines Gussverfahrens zum Herstellen eines erfindungsgemäßen Formteils mit einer hohlen Innengeometrie mit mindestens einer Ausnehmung;
Fig. 2 einen Längsschnitt durch ein herkömmliches Formteil mit einer hohlen Innengeometrie und einer Ausnehmung mit scharfen Kanten;
Fig. 3 eine perspektivische Sicht auf ein herkömmliches Formteil, beispielsweise das Formteil der Fig. 2, mit hohler Innengeometrie und einer Ausnehmung mit scharfen Kanten;
Fig. 4 einen Längsschnitt durch ein herkömmliches Formteil, beispielsweise das Formteil der Fig. 2 bis 3, mitje einem eingesetzten Schieber in der hohlen Innengeometrie und der Ausnehmung;
Fig. 5 einen Längsschnitt durch ein herkömmliches Formteil, beispielsweise das Formteil der Fig. 2 bis 4, mit einem in die hohle Innengeometrie eingesetzten weiteren Objekt;
Fig. 6 einen Querschnitt durch ein herkömmliches Formteil, beispielsweise das Formteil der Fig. 2 bis 5, mit einem in die hohle Innengeometrie eingesetzten weiteren Objekt, welches in dem Formteil rotierbar ist;
Fig. 7 einen Längsschnitt eines erfindungsgemäßen Formteils mit einer hohlen Innengeometrie und einer Ausnehmung und entschärften Kanten;
Fig. 8 ein Längsschnitt des erfindungsgemäßen Formteils mit hohler Innengeometrie und einer Ausnehmung mit entschärften Kanten, beispielsweise das Formteil der Fig. 7, mit einem eingesetzten erfindungsgemäßen ersten Formkern in der hohlen Innengeometrie und einem zweiten Formkern in der Ausnehmung;
Fig. 9 einen Querschnitt des erfindungsgemäßen Formteils mit hohler Innengeometrie und einer Ausnehmung mit entschärften Kanten, beispielsweise das Formteil der Fig. 7 bis 8, mit einem in die hohle Innengeometrie eingesetzten weiteren Objekt, welches in dem Formteil rotierbar ist, und wobei Weichkomponenten zwischen dem erfindungsgemäßen Formteil und dem weiteren Objekt angeordnet sind;
Fig. 10 eine perspektivische Sicht auf die hohle Innengeometrie eines ersten erfindungsgemäßen Formteils mit einer Durchgangsöffnung;
Fig. 11 eine perspektivische Sicht auf die hohle Innengeometrie eines zweiten erfindungsgemäßen Formteils mit einer Zwischentasche, die eine Ruheposition definieren kann;
Fig. 12 ein vergrößertes Detail der Anschlüsse von erster zu zweiter zu dritterzu vierter Teilfläche in einem Ausführungsbeispiel, in dem die zweite Mantelteilfläche des ersten Formkerns sich über die gesamte Länge der Durchgangsöffnung ausdehnt; und
Fig. 13 ein vergrößertes Detail der Anschlüsse von erster zu zweiter zu dritterzu vierter Teilfläche in einem weiteren Ausführungsbeispiel, in dem die dritte Mantelteilfläche des ersten Formkerns sich an die zweite Mantelteilfläche im Bereich der Durchgangsöffnung anschließt.

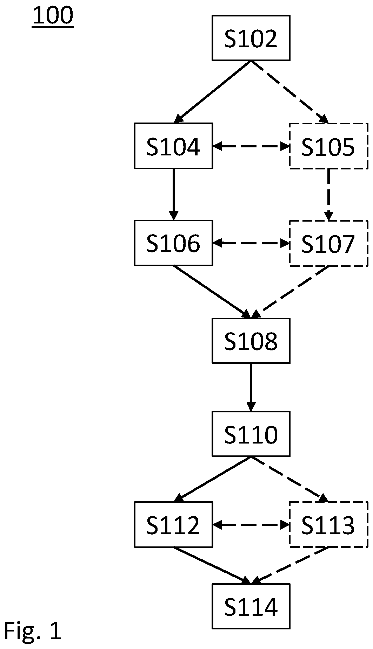

Fig. 1 zeigt beispielhaft ein schematisches Ablaufdiagramm eines erfindungsgemäßen Gussverfahrens 100 zum Herstellen eines Formteils mit einer hohlen Innengeometrie mit mindestens einer Ausnehmung. Alternative, hier nicht gezeigte Abläufe zur Herstellung eines erfindungsgemäßen Gussverfahrens 100 sind ebenfalls möglich, beispielsweise ein Herausziehen des ersten Schiebers mit einem darauf noch angeordneten Formteil (welches sich aufgrund Materialschwindung aus der Matrize löst) und erst nachfolgend das Entfernen des Formteils vom Schieber.

Das Gussverfahren 100 umfasst einen Schritt S102 des Bereitstellens mindestens einer Matrize, welche dazu ausgebildet ist, eine Außengeometrie des Formteils in einem zusammengesetzten Zustand eines teilbaren Gusswerkzeugs zu definieren.

Das Gussverfahren 100 umfasst ferner einen Schritt S104 des Bereitstellens eines ersten Formkerns mit einer Mantelfläche, die eine erste und zumindest eine zweite Mantelteilfläche umfasst, die jeweils eine Konizität mit einem Winkel größer als null zu einer Ausrückachse des ersten Formkerns aufweisen. Erfindungsgemäß ist der zweite Winkel kleiner als der erste Winkel und die zugehörige zumindest eine zweite Mantelteilfläche in zusammengesetzten Zustand zum distalen Ende einer Gusskavität hin angeordnet.

Das Gussverfahren 100 umfasst ferner einen Schritt S106 des relativen Einrückens des ersten Formkerns in eine Endposition innerhalb der mindestens einen Matrize, um den zusammengesetzten Zustand des teilbaren Gusswerkzeugs zur erhalten.

Das Gussverfahren 100 umfasst ferner einen Schritt S108 des Einbringens von Gussmaterial in das zusammengesetzte teilbare Gusswerkzeug.

Das Gussverfahren 100 umfasst ferner einen Schritt S110 des Erstarren Lassens des eingebrachten S108 Gussmaterials.

Das Gussverfahren 100 umfasst ferner einen Schritt S112 des relativen Ausrückens des ersten Formkerns aus dem erstarrten S110 Gussmaterial.

Das Gussverfahren 100 umfasst ferner einen Schritt S114 des Entfernens des erstarrten S110 Gussmaterials aus der mindestens einen Matrize, um das hergestellte Formteil zu erhalten.

In einem Ausführungsbeispiel ist die mindestens eine Ausnehmung eine Durchgangsöffnung.

Das Gussverfahren 100 kann einen Schritt S105 des Bereitstellens eines zweiten Formkerns umfassen. Eine Außengeometrie eines distalen Endes (auch: der Stirnfläche) des zweiten Formkerns kann in den Endpositionen des Einschiebens des ersten und zweiten Formkerns formpassend zu einem Bereich der Mantelfläche des ersten Formkerns an dem zumindest einen Vorsprung sein.

Beispielsweise können der erste Formkern und der zweite Formkern gleichzeitig bereitgestellt S104; S105 werden.

Das Gussverfahren 100 kann einen Schritt S107 des relativen Einrückens des zweiten Formkerns in eine Durchgangsöffnung in der durch die mindestens eine Matrize definierten Außengeometrie der Gusskavität umfassen, so dass das distale Ende (bzw. die Stirnfläche) des zweiten Formkerns formschlüssig zu der Mantelfläche des ersten Formkerns angeordnet ist.

Der zweite Formkern kann beispielsweise direkt nach dem relativen Einrücken S106 des ersten Formkerns in die Durchgangsöffnung relativ eingerückt S107 werden.

Das Gussverfahren 100 kann einen Schritt S113 des Herausziehens des zweiten Formkerns aus dem erstarrten Gussmaterial umfassen.

Beispielsweise können der erste Formkern und der zweite Formkern gleichzeitig oder direkt nacheinander aus dem erstarrten Gussmaterial herausgezogen S112; S113 werden.

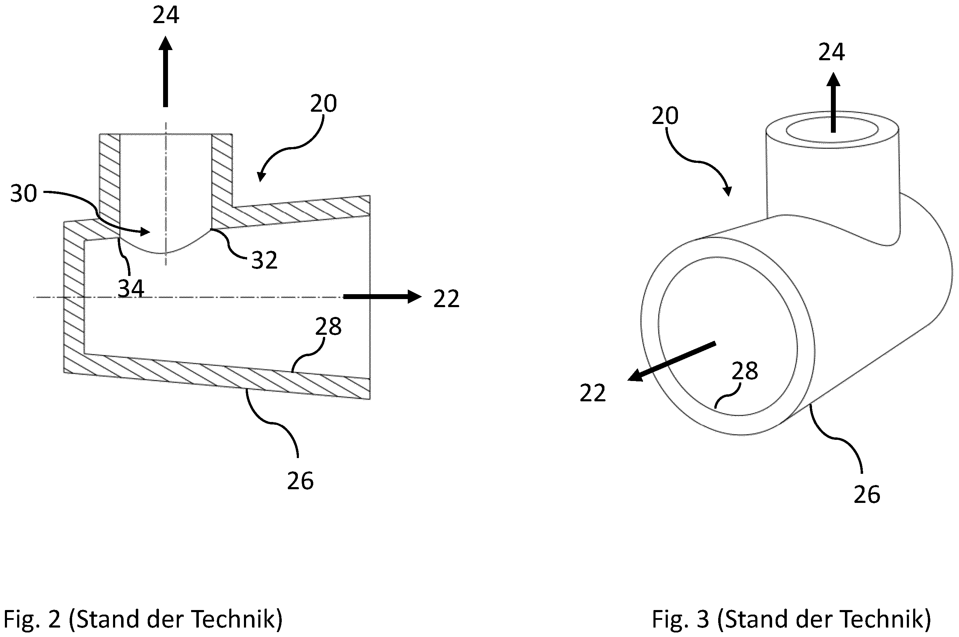

In den weiteren Ausführungsbeispielen der Figuren 2 bis 13 werden Schieber als Ausführungsbeispiele für Formkerne verwendet.

Fig. 2 zeigt einen Längsschnitt durch ein herkömmliches Formteil 20 mit einer Außengeometrie 26, hohler Innengeometrie 28 und einer Ausnehmung 30. Das Formteil 20 kann beispielsweise ein Ventilgehäuse und die Ausnehmung 30 eine Durchgangsöffnung zum Durchführen eines Fluids sein.

In Fig. 2 ist das herkömmliches Formteil 20 mit zwei Ausrückachsen 22; 24 für einen ersten Schieber bzw. einen zweiten Schieber gezeigt. Der zweite Schieber wird dabei aus der Ausnehmung 30 ausgerückt.

Wie in Fig. 2 gezeigt weist das herkömmliches Formteil 20 scharfe Kanten 32; 34 am proximalen bzw. distalen Ende der Ausnehmung 30 in der hohlen Innengeometrie 28 auf.

Fig. 3 bis 6 zeigen weitere Ausführungsbeispiele eines herkömmlichen Formteils 20 in verschiedenen Perspektiven mit und ohne Einschübe von Schiebern oder einem weiteren Objekt, beispielsweise eines Ventils. Das herkömmlichen Formteil 20 kann in den Fig. 2 bis 6 identisch sein. Gleiche Merkmale sind in den Fig. 2 bis 6 durchgehend mit denselben Bezugszeichen bezeichnet.

Fig. 3 zeigt eine perspektivische Darstellung des herkömmlichen Formteils 20 mit Blickrichtung entlang der Ausrückachse 22 des Schiebers.

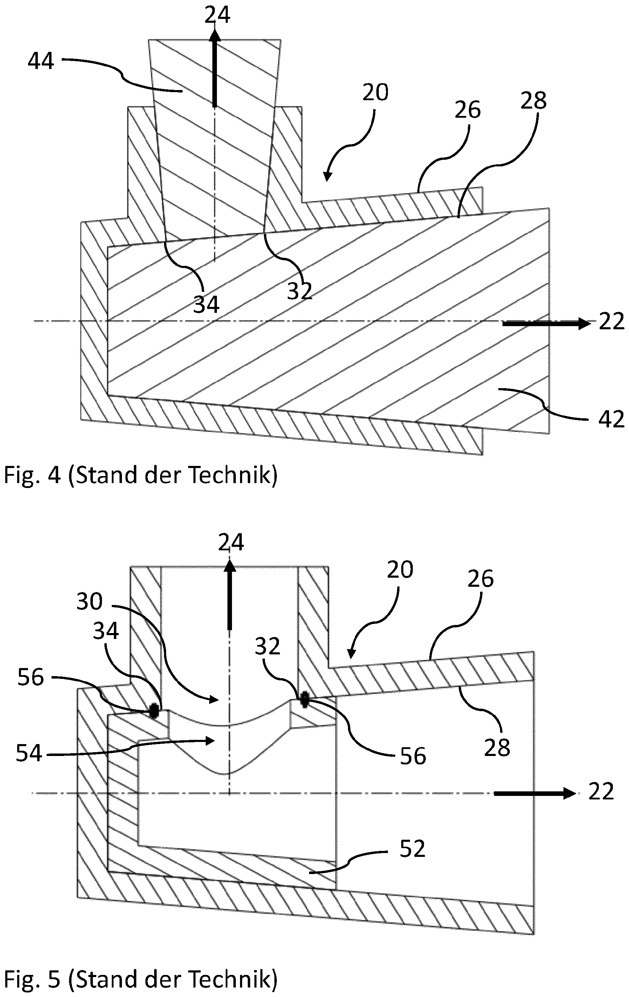

Fig. 4 zeigt das herkömmliche Formteil 20 mit eingeschobenem erstem Schieber 42 und eingeschobenem zweiten Schieber 44. Der erste Schieber 42 und der zweite Schieber 44 sind in ihren jeweiligen Endpositionen im zusammengesetzten Zustand des Gusswerkzeugs gezeigt, in denen sie formschlüssig aneinandergrenzen. Das proximale Ende 32 und das distale Ende 34 der Durchgangsöffnung 44 des Formteils 20 schließen an den Winkeln zwischen den Schiebern an.

Fig. 5 zeigt das herkömmliche Formteil 20 mit eingesetztem weiteren Objekt 52. Das weitere Objekt 52 kann beispielsweise ein Ventileinsatz sein, der in dem Ventilgehäuse als Formteil 20 sitzt. Das beispielhaft in Fig. 5 gezeigte weitere Objekt 52 weist eine Öffnung 54 auf, die in einer vorbestimmten Einsatzposition oder Einsatzorientierung an die Ausnehmung 30 bzw. Durchgangsöffnung des Formteils 20 anschließt. Dadurch kann beispielsweise in einer vorbestimmten Ventilstellung eine Fluidverbindung zwischen dem Innenraum des Ventils und dem Außenbereich des Ventilgehäuses hergestellt werden.

In Fig. 5 sind beispielhaft zwei Weichkomponenten 56 gezeigt, die nahe an der Ausnehmung 30 bzw. Durchgangsöffnung angeordnet sind. Die Weichkomponenten 56 können Dichtungskomponenten sein. Beispielsweise können die beiden in Fig. 5 gezeigten Weichkomponenten 56 Teile eines im Schnitt gezeigten Dichtungsrings sein.

Die Weichkomponenten 56 können durch die scharfen Kanten 32; 34 herkömmlicherweise leicht beschädigt werden. Beispielsweise können Dichtungskomponenten (etwa ein Dichtungsring) 56 durch Reibung an den scharfen Kanten 32; 34 verschleißen und so die Einsatzzeit des Ventils begrenzen bzw. verkürzen.

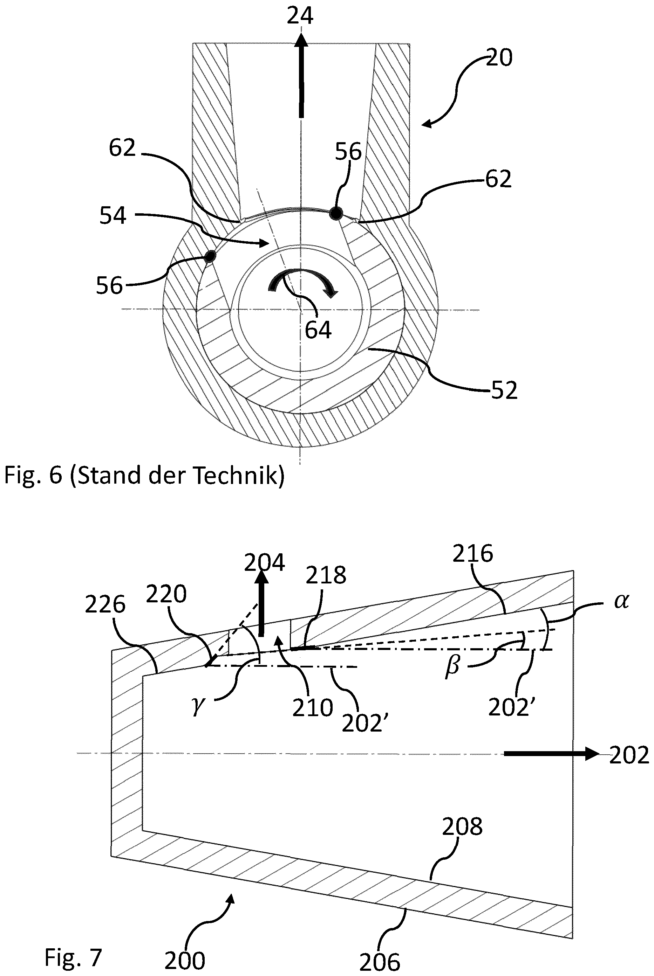

Fig. 6 zeigt das herkömmliche Formteil 20 mit eingesetztem weiteren Objekt 52 in einem Querschnitt. Wie in Fig. 6 beispielhaft gezeigt kann das weitere Objekt 52 (beispielsweise derVentileinsatz) in dem Formteil 20 rotierbar sein. An Bezugszeichen 64 ist eine Rotationsrichtung 64 beispielhaft schematisch skizziert. Wie in Fig. 6 ersichtlich reiben die Weichkomponenten 56 bei Rotation des weiteren Objekts 52 an den scharfen Kanten 62 der Ausnehmung 30, die in dieser Querschnittsdarstellung näherungsweise parallel zur Einsetzrichtung des weiteren Objekts 52 sein können.

Wie in Figuren 1 bis 6 ersichtlich ist bei Entformung von Kanalstrukturen im Spritzgusswerkzeug herkömmlicherweise problematisch, dass ein scharfkantiger Innenbereich insbesondere bewegte Dichtungen beschädigen kann. Die scharfen Kanten müssen herkömmlicherweise verrundet werden, um eine Verletzungsgefahr bzw. eine Beschädigung der Weichkomponente zu reduzieren. Allerdings entstehen bei herkömmlichen Verrundungen Grate in der Kunststoffwandung, die durch das Formteil 20 gebildet wird.

Die erfindungsgemäße Technik ermöglich einen Weichkomponentenschutz, indem eine effiziente und kostengünstige Fertigung von Formteilen ermöglicht wird. Dadurch können aufwendige Entformungstechniken, in denen Verrundungen vorgenommen werden, vermieden werden.

Fig. 7 zeigt einen ersten Längsschnitt durch ein erfindungsgemäßes Formteil 200. Das erfindungsgemäße Formteil 200 kann beispielsweise ein Ventilgehäuse sein mit gegenüber dem Stand der Technik entschärften Kanten.

Das erfindungsgemäße Formteil 200 weist einen Außengeometrie 206 und eine hohle Innengeometrie 28 auf. Entlang der Achse 202 ist ein erster Schieber relativ ausrückbar. Zum Vergleich von Neigungswinkeln von Teilstücken der Innenfläche 216; 218; 220 sind Parallelverschiebungen 202' der Achse 202 in Fig. 7 gezeigt.

An Bezugszeichen 210 ist eine Ausnehmung im Formteil 200 gezeigt, die eine Durchgangsöffnung sein kann (beispielsweise für eine Fluidverbindung). Die Durchgangsöffnung kann eine zweite Ausrückachse 204 für einen zweiten Schieber aufweisen, wie in Fig. 7 beispielhaft skizziert.

Im in Fig. 7 gezeigten Ausführungsbeispiel weist die hohle Innengeometrie 208 Teilstücke der Innenfläche mit Konizitäten mit unterschiedlichen Winkeln auf. Die erste Innenteilfläche 216 weist einen ersten Winkel α zu der Ausrückachse 202 auf. Die zweite Innenteilfläche 218 grenzt an das proximale Ende der Ausnehmung 210 an und weist einen zweiten Winkel β zur parallelverschobenen Ausrückachse 202' auf. Der zweite Winkel β ist kleiner als der erste Winkel α. Die dritte Innenteilfläche 220 ist am distalen Ende der Ausnehmung 210 angeordnet und weist einen dritten Winkel γ zur parallelverschobenen Ausrückachse 202' auf. Der dritte Winkel γ ist, wie in Fig. 7 schematisch dargestellt, größer als der erste Winkel α und der zweite Winkel β. Dadurch kann die anschließende vierte Innenteilfläche 226 in Verlängerung der ersten Innenteilfläche 216 ausgebildet sein.

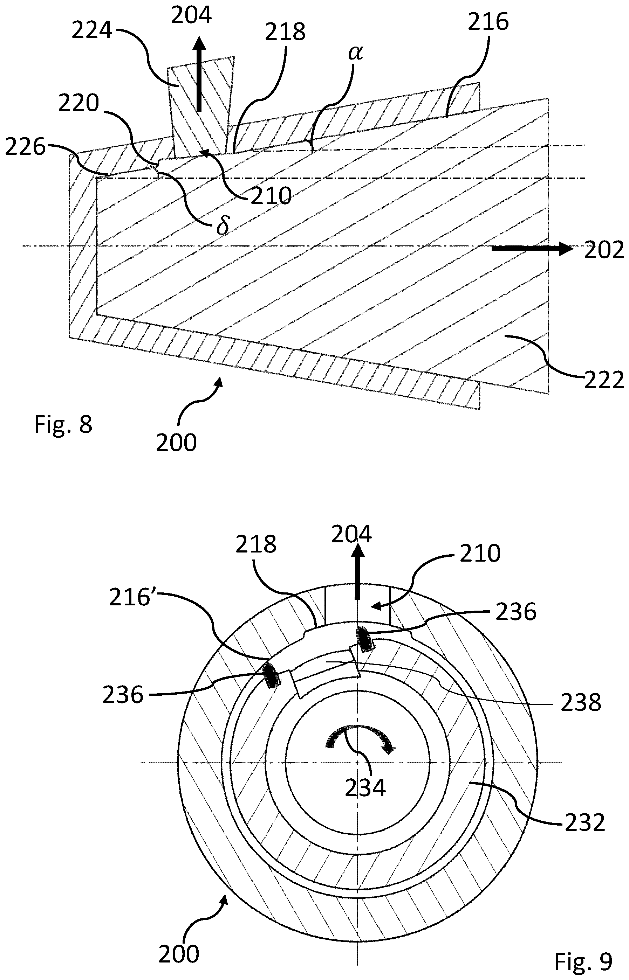

Fig. 8 zeigt einen weiteren Längsschnitt durch das erfindungsgemäßes Formteil 200. In Fig. 8 sind ein erster Schieber 222 und ein zweiter Schieber 224 entlang den Ausrückachsen 202 bzw. 204 bis zu ihren jeweiligen Endpositionen in das Formteil 200 eingeschoben. Die Schieber 222; 224 schließen in ihren Endpositionen formschlüssig aneinander an.

Wie in Fig. 8 schematisch skizziert ist die Schiebermantelfläche des ersten Schiebers 222 das Negativ zu der Innenfläche des Formteils 200 und weist entsprechende Mantelteilflächen 216; 218; 220; 226 mit unterschiedlichen Konizitäten auf. Die Mantelteilflächen des ersten Schiebers 222 sind mit denselben Bezugszeichen versehen wie die zugehörigen Innenteilflächen des Formteils 200. Die Winkel werden identisch für die Mantelteilflächen und die Innenteilflächen definiert.

Fig. 9 zeigt einen Querschnitt durch das erfindungsgemäße Formteil 200 mit einem weiteren Objekt 232, das eingesetzt ist. Beispielsweise kann ein Ventileinsatz in ein Ventilgehäuse als Formteil 200 eingesetzt sein. Wie in Fig. 9 schematisch skizziert können an dem weiteren Objekt 232 Weichkomponenten 236 angebracht sein.

Das weitere Objekt 232 kann relativ zu dem Formteil 200 rotieren. In Fig. 9 ist beispielhaft eine Rotationsrichtung 234 gezeigt.

Durch die zweite Innenteilfläche 218 mit Konizität mit einem zweiten Winkel wird eine Reibung der Weichkomponenten 236 im Bereich an den Kanten der Ausnehmung 218 des Formteils 200 vermieden. Eine solche Reibung würde bei Verlängerung des Teilstücks 216' der Innenfläche bis hin zur Ausnehmung, wie sie im Stand der Technik üblich ist, entstehen.

Fig. 9 kann als exemplarische Schnittansicht eines Ventilgehäuses 200 mit einer Öffnung 210 und einem Ventileinsatz 232 mit einer passenden Öffnung 238 gesehen werden. Dabei ist im Ventileinsatz 232 eine Dichtungsnut integriert, wobei die darin liegende Dichtung 236 den Bereich um die Öffnung 238 (auch: Auslassgeometrie des Ventils) abdichtet. Im Ventilgehäuse 200 ist ebenfalls eine Öffnung 210 für den entsprechenden Auslassquerschnitt. Im Bereich der Öffnung 210 ist im Ventilgehäuse 200 eine Aussparung (bzw. Ausnehmung) integriert, welche verhindert, dass die im Ventileinsatz 232 liegende Dichtung 236 über scharfkantige Bereiche bewegt wird, wenn derVentileinsatz 232 relativ zum Ventilgehäuse 200 rotiert. Dies wird dadurch erreicht, dass Ventileinsatz 232 und Ventilgehäuse 200 konisch geformt sind, wobei der Winkel im Bereich der Aussparung 210 im Ventilgehäuse 200 geringer ist als der Winkel des Ventileinsatzes 232.

Die Dichtung 236 kann ein (z.B. geschlossener) Dichtring sein.

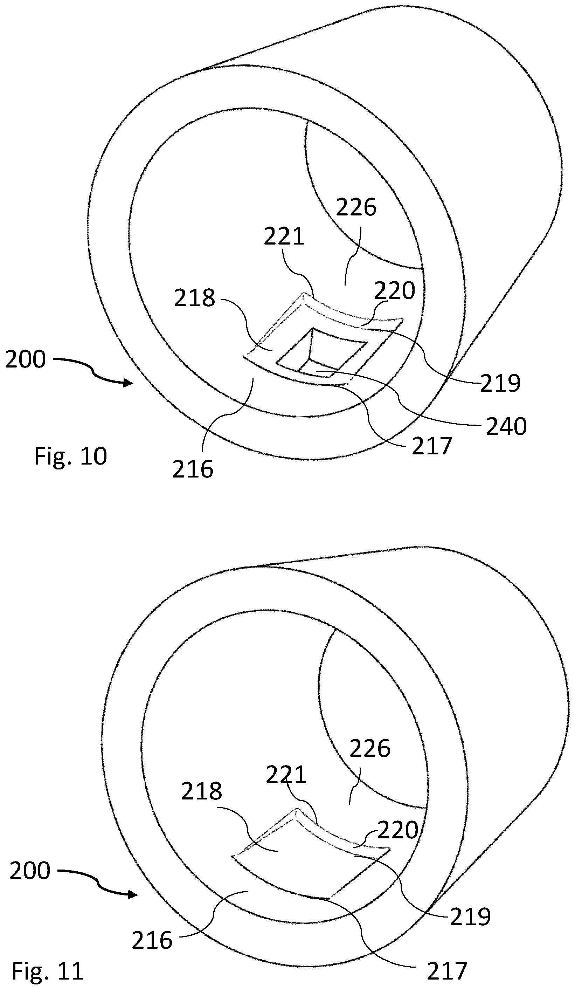

Fig. 10 zeigt eine perspektivische Sicht auf die Innenfläche des hergestellten Formteils 200, welches eine Durchgangsöffnung 240 im Bereich einer Ausnehmung aufweist. Die Ausnehmung ist durch die zweite Innenteilfläche 218 bestimmt, welche über die Anschlusslinie 217 an die erste Innenteilfläche 216 anschließt. In distaler Richtung ist eine weitere Anschlusslinie 219 von der zweiten Innenteilfläche 218 and die dritte Innenteilfläche 220 skizziert. Noch weiter in distaler Richtung ist eine weitere Anschlusslinie 221 zwischen der dritten Innenteilfläche 220 und der vierten Innenteilfläche 226 skizziert.

Fig. 11 zeigt eine perspektivische Sicht auf die Innenfläche des hergestellten Formteils 200, welches eine Ausnehmung bzw. Zwischentasche ohne Durchgangsöffnung, beispielsweise als Ruheposition, aufweist. Dieselben Merkmale wie in Fig. 10 sind mit denselben Bezugszeichen bezeichnet.

Während für das Erhalten der Durchgangsöffnung 240 in Fig. 10 ein zweiter Schieber im Gusswerkzeug verwendet wird, entsteht die Zwischentasche der Fig. 11 allein durch den Vorsprung im ersten Schieber des Gusswerkzeugs.

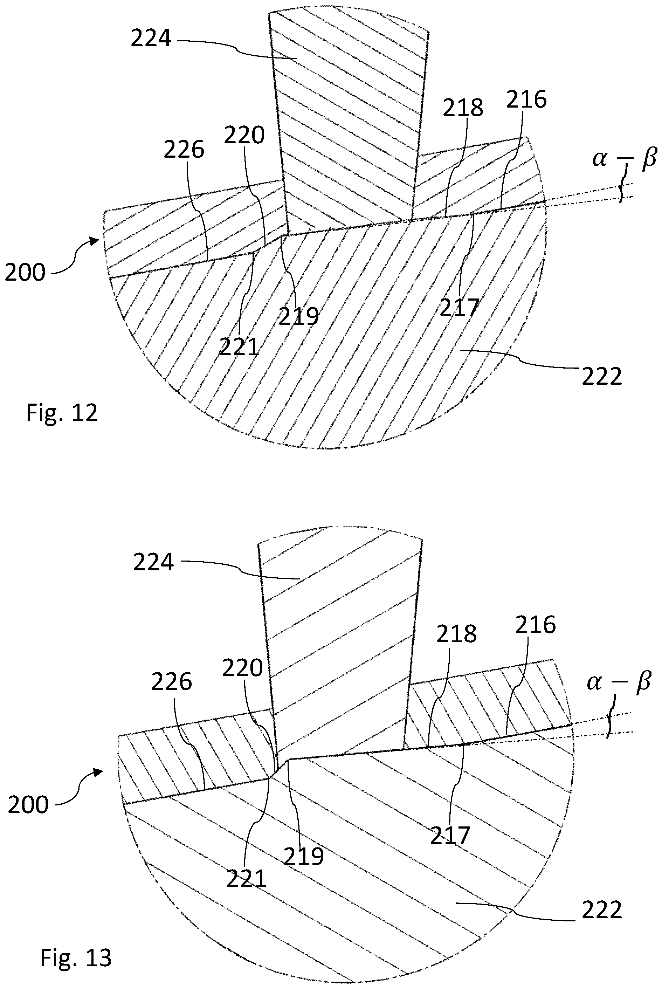

Fig. 12 und 13 zeigen Ausschnitte der Anschlussbereiche 217; 219; 221 zwischen der ersten und zweiten, der zweiten und dritten bzw. der dritten und vierten Innenteilfläche des Formteils 200 bzw. der entsprechenden Mantelteilfläche des ersten Schiebers 222. Wie in Fig. 12 ersichtlich ist, erstreckt sich die zweite Mantelteilfläche 218 über die gesamte Durchgangsöffnung, so dass der zweite Schieber 224 eine einfache Stirnfläche (auch: Abschlussgeometrie) hat.

In Fig. 13 ist eine alternative Ausführungsform gezeigt, in der der Anschluss 219 zwischen der zweiten Mantelteilfläche 218 und der dritten Mantelteilfläche 219 des Schiebers 222 im Bereich der Durchgangsöffnung liegt, so dass der zweite Schieber 224 eine komplexere Stirnfläche (auch: Abschlussgeometrie) haben muss.

Die erfindungsgemäße Technik stellt eine Geometrie für ein Formteil 200 bzw. einen Gehäusekörper (z.B. Ventilgehäuse) bereit, welcher eine Bewegung relativ zu einem weiteren Objekt 232 bzw. zweiten Körper (z.B. Ventileinsatz) mit einer Weichkomponente (z.B. einer Dichtung 236) ohne scharfkantige Bereiche im Kontaktbereich zur Dichtung 236 aufweist und sich dabei vorteilhafterweise hinterschnittfrei in einem Gußverfahren herstellen lässt.

Die Aussparung (auch: Ausnehmung) zum Schutz der Weichkomponente wird durch den geringeren Winkel β einer Konizität gegenüber dem Winkel α des Ventilgehäuses mit zunehmender Tiefe in axialer Richtung immer tiefer. Die Differenz der Winkel, α-β, muss dabei derart ausgeführt sein, dass eine Tiefe t der Aussparung zum Schutz der Weichkomponente an jeder möglichen Kontaktstelle zur Dichtung das Maß t die Verpressung der Dichtung übersteigt und die Dichtung somit nur zum verrundeten Bereich (beispielsweise an Bezugsziechen 220 in Fig. 12) der Aussparung Kontakt hat und der scharfkantige Bereich der Aussparung (beispielsweise an der Stelle, wo die Mantelflächen des ersten und zweiten Schiebers 222; 224 in einem ungefähr rechten Winkel aufeinander treffen in Fig. 12) nicht mit der Dichtung in Berührung kommt.

Die Aussparung zum Schutz der Weichkomponente wird in einer Entformungsrichtung, die der Ausrückachse 202 des ersten Schiebers 222 entspricht, entformt. Somit ist der verrundete Bereich des Formteils (und/oder der Weichkomponente) ohne zusätzliche Entformungsmechanik in einem Spritzgusswerkzeug entformbar.

Der erste Winkel α kann in einem Ausführungsbeispiel 2,5° betragen. Der zweite Winkel β kann in einem Ausführungsbeispiel 0,5° betragen.

Die Differenz der Winkel, α-β, kann beispielsweise 2° betragen.

Auch wenn in Fig. 9 nur beispielhaft ein Schnitt mit zwei Dichtungselementen 236 gezeigt ist, kann sich eine Dichtung (beispielsweise ein Dichtungsring) über eine komplette Zwischentasche oder Durchgangsöffnung ziehen.

Eine Taschentiefe einer Zwischentasche muss mindestens so groß sein, dass die Dichtung im entspannten Zustand nicht die scharfe Kante am Auslass bzw. am Rand der Zwischentasche erreicht In Fig. 9 ist ein Ventilgehäuse 200 dargestellt, in dem ein Ventileinsatz232 rotiert, und in dem Ventileinsatz 232 ist eine Dichtung 236 in Form einer Weichkomponente montiert. In weiteren Ausführungsformen der Erfindung kann derVentileinsatz 232 ebenfalls translatorisch oder auf gekrümmten Bahnverläufen im Ventilgehäuse 200 bewegt werden.

Im Allgemeinen gilt die erfindungsgemäße Technik für zwei relativ zueinander bewegte Körper, wobei in einem der Körper eine Weichkomponente montiert ist, welche über eine Öffnung bewegt werden muss. Hierfür ist im Allgemeinen die Geometrie der Aussparung (auch: Ausnehmung) zum Schutz der Weichkomponente anwendbar.

Weitere Ausführungsformen der vorliegenden Erfindung ergeben sich durch die Kombination vorstehend in Verbindung mit unterschiedlichen Ausführungsformen beschriebener Merkmale. Derartige Kombinationen sollen daher ausdrücklich als offenbart und vom Schutz mitumfasst gelten. Eine Beschreibung dieser Ausführungsbeispiele im Einzelnen wird lediglich im Interesse einer knappen Darstellung der Erfindung ausgelassen, ist aber vom Fachmann ohne weiteres zu ergänzen.

### Bezugszeichenliste

- 100: Verfahren zum Herstellen eines Gussobjekts
- S102: Schritt des Bereitstellens einer Matrize
- S104: Schritt des Bereitstellens eines Schiebers
- S105: Schritt des Bereitstellens eines weiteren Schiebers
- S106: Schritt des Einschiebens des Schiebers
- S107: Schritt des Einschiebens des weiteren Schiebers
- S108: Schritt des Einbringens von Gussmaterial
- S110: Schritt des Erstarren Lassens des Gussmaterials
- S112: Schritt des Herausziehens des Schiebers
- S113: Schritt des Herausziehens des weiteren Schiebers
- S114: Schritt des Entfernens des erstarrten Gussmaterials aus der Matrize
- 20: Herkömmliches Gussobjekt, beispielsweise Ventilgehäuse
- 22: Achse oder Ausrückachse des Schiebers
- 24: Achse oder Ausrückachse des weiteren Schiebers
- 26: Außengeometrie des Gussobjekts
- 28: Hohle Innengeometrie des Gussobjekts
- 30: Ausnehmung, beispielsweise Durchgangsöffnung
- 32: Proximales Ende der Ausnehmung
- 34: Distales Ende der Ausnehmung
- 42: Schieber
- 44: Weiterer Schieber
- 52: Weiteres Objekt, beispielsweise Ventil
- 54: Öffnung im weiteren Objekt
- 56: Weichkomponente, beispielsweise Dichtungselement
- 62: Scharfe Kante der Ausnehmung, näherungsweise parallel zur Ausrückachse
- 64: Drehrichtung des weiteren Objekts
- 200: Gussobjekt, beispielsweise Ventilgehäuse
- 202;: Achse der Ausrückachse des Schiebers;
- 202': Bzw. parallele Verschiebung der Achse
- 204: Achse der Ausrückachse des weiteren Schiebers
- 206: Außengeometrie des Gussobjekts
- 208: Hohle Innengeometrie des Gussobjekts
- 210: Ausnehmung, beispielsweise umfassend eine Durchgangsöffnung
- 216: Erste Teilfläche mit Konizität mit erstem Winkel
- 217: Anschlusslinie von erster zu zweiter Teilfläche
- 218: Zweite Teilfläche mit zweitem Winkel
- 219: Anschlusslinie von zweiter zu dritter Teilfläche
- 220: Dritte Teilfläche mit drittem Winkel
- 221: Anschlusslinie von dritter zu vierter Teilfläche
- 222: Erster Schieber
- 224: Zweiter Schieber
- 226: Vierte Teilfläche
- 232: Weiteres Objekt, beispielsweise Ventil
- 234: Drehrichtung des weiteren Objekts
- 236: Weichkomponente, beispielsweise Dichtungselement
- 238: Öffnung im weiteren Objekt
- 240: Durchgangsöffnung
- α: Erster Winkel
- β: Zweiter Winkel
- γ: Dritter Winkel
- δ: Vierter Winkel

## Patentansprüche

1. Teilbares Gusswerkzeug, zur Herstellung eines Formteils, mit wenigstens einer Gusskavität aufweisend zumindest einen Vorsprung in einem zusammengesetzten Zustand des Gusswerkzeugs, umfassend:
- mindestens eine Matrize, welche dazu ausgebildet ist, eine Außengeometrie des Formteils im zusammengesetzten Zustand des teilbaren Gusswerkzeugs zu definieren; und
- einen ersten Formkern (42), welcher dazu ausgebildet ist, eine hohle Innengeometrie des Formteils im zusammengesetzten Zustand des teilbaren Gusswerkzeugs zumindest teilweise zu definieren, wobei der erste Formkern (42) zumindest teilweise im Wesentlichen linear entlang einer Ausrückachse relativ zu dem hergestellten Formteil aus der hohlen Innengeometrie ausrückbar ist, und
wobei eine Mantelfläche des ersten Formkerns (42) im zusammengesetzten Zustand des teilbaren Gusswerkzeugs eine erste Mantelteilfläche (216) mit einer Konizität mit einem ersten Winkel größer als null Grad, α>0°, relativ zu der Ausrückachse aufweist,
**dadurch gekennzeichnet, dass**
die Mantelfläche des ersten Formkerns (42) stückweise im zusammengesetzten Zustand distal anschließend an die erste Mantelteilfläche (216) zumindest eine zweite Mantelteilfläche (218) mit einem zweiten Winkel größer oder gleich null Grad, β≥0°, relativ zu der Ausrückachse aufweist, wobei der zweite Winkel kleiner ist als der erste Winkel, β<α, und wobei die zumindest eine zweite Mantelteilfläche (218) den zumindest einen Vorsprung der wenigstens einen Gusskavität im zusammengesetzten Zustand des teilbaren Gusswerkzeugs definiert.

2. Teilbares Gusswerkzeug gemäß Anspruch 1, ferner umfassend:
- Einen zweiten Formkern (44), welcher dazu ausgebildet ist, eine Durchgangsöffnung in der Innengeometrie des Formteils im zusammengesetzten Zustand des teilbaren Gusswerkzeugs zu definieren, wobei eine Stirnfläche des zweiten Formkerns (44) im zusammengesetzten Zustand des teilbaren Gusswerkzeugs formschlüssig an einen Bereich der zumindest einen zweiten Mantelteilfläche (218) anschließt, und
wobei der distale Anschluss der zumindest einen zweiten Mantelteilfläche (218) an die erste Mantelteilfläche (216) im zusammengesetzten Zustand des teilbaren Gusswerkzeugs vom formschlüssigen Anschluss der Stirnfläche des zweiten Formkerns (44) an den Bereich der Mantelfläche des ersten Formkerns (42) in proximale Richtung versetzt ist.

3. Teilbares Gusswerkzeug gemäß Anspruch 1 oder 2, wobei die Mantelfläche des ersten Formkerns (42) ferner distal anschließend an die zumindest eine zweite Mantelteilfläche (218) zumindest eine dritte Mantelteilfläche (220) mit einem dritten Winkel größer als null Grad, γ>0°, relativ zu der Ausrückachse aufweist, wobei der dritte Winkel größerer ist als der erste Winkel, γ>α, und wobei, optional, die Mantelfläche des ersten Formkerns (42) distal anschließend an die zumindest eine dritte Mantelteilfläche (220) eine vierte Mantelteilfläche (226) mit im Wesentlichem dem ersten Winkel, δ≅α, relativ zu der Ausrückachse aufweist.

4. Teilbares Gusswerkzeug gemäß Anspruch 3 in Kombination mit Anspruch 2, wobei der distale Anschluss der vierten Mantelteilfläche (226) an die zumindest eine dritte Mantelteilfläche (220) im zusammengesetzten Zustand des teilbaren Gusswerkzeugs vom formschlüssigen Anschluss der Stirnfläche des zweiten Formkerns (44) an den Bereich der Mantelfläche des ersten Formkerns (42) in distale Richtung versetzt ist.

5. Gussverfahren zum Herstellen eines Formteils mit einer hohlen Innengeometrie mit mindestens einer Ausnehmung, das Gussverfahren umfassend die Schritte:
- Bereitstellen (S102) mindestens einer Matrize, welche dazu ausgebildet ist, eine Au-ßengeometrie des Formteils in einem zusammengesetzten Zustand eines teilbaren Gusswerkzeugs zu definieren;
- Bereitstellen (S104) eines ersten Formkerns (42) mit einer Mantelfläche gemäß einem der Ansprüche 1 bis 5, und optional Bereitstellen (S105) eines zweiten Formkerns (44) gemäß Anspruch 2;
- Relatives Einrücken (S106) des ersten Formkerns (42), und optional relatives Einrücken (S107) des zweiten Formkerns (44), in eine Endposition innerhalb der mindestens einen Matrize, um den zusammengesetzten Zustand des teilbaren Gusswerkzeugs zur erhalten;
- Einbringen (S108) eines Gussmaterials in das zusammengesetzte teilbare Gusswerkzeug;
- Erstarren (S110) lassen des eingebrachten Gussmaterials;
- Relatives Ausrücken (S112) des ersten Formkerns (42), und optional relatives Ausrücken (S113) des zweiten Formkerns, aus dem erstarrten Gussmaterial; und
- Entformen (S114) des erstarrten Gussmaterials aus der mindestens einen Matrize, um das hergestellte Formteil zu erhalten.

6. Formteil mit zumindest einer Ausnehmung, umfassend:
- eine Außengeometrie des Formteils;
- eine hohle Innengeometrie des Formteils, wobei die hohle Innengeometrie eine Innenfläche aufweist, wobei die Innenfläche eine erste Innenteilfläche mit einer ersten Konizität mit einem ersten Winkel größer als null Grad, α>0°, relativ zu einer Ausrückachse aufweist, die durch eine relative Ausrückbarkeit eines Formkerns definiert ist,
**dadurch gekennzeichnet, dass**
die Innenfläche des Formteils stückweise distal anschließend an die erste Innenteilfläche zumindest eine zweite Innenteilfläche mit einem zweiten Winkel größer oder gleich null Grad, β≥0°, relativ zu der Ausrückachse aufweist, wobei der zweite Winkel kleiner ist als der erste Winkel, β<α,und wobei die zumindest eine zweite Innenteilfläche die zumindest eine Ausnehmung definiert.

7. Formteil gemäß Anspruch 6, wobei die zumindest eine Ausnehmung eine Durchgangsöffnung umfasst, und wobei der distale Anschluss der zumindest einen zweiten Innenteilfläche an die erste Innenteilfläche von der Durchgangsöffnung in proximale Richtung versetzt ist.

8. Formteil gemäß Anspruch 6 oder7, wobei die Innenfläche ferner distal anschließend an die zumindest eine zweite Innenteilfläche zumindest eine dritte Innenteilfläche mit einem dritten Winkel größer als null Grad, γ>0°, relativ zu der Ausrückachse aufweist, wobei der dritte Winkel größerer ist als der erste Winkel, γ>α.

9. Formteil gemäß einem der Ansprüche 6 bis 8, wobei die Innenfläche ferner distal anschließend an die zumindest eine dritte Innenteilfläche eine vierte Innenteilfläche mit im Wesentlichem dem ersten Winkel, δ≅α, relativ zu der Ausrückachse aufweist.

10. Formteil gemäß Anspruch 9 in Kombination mit Anspruch 7, wobei der distale Anschluss der vierten Innenteilfläche an die zumindest eine dritte Innenteilfläche von der Durchgangsöffnung in distale Richtung versetzt ist.

11. System umfassend:
- Ein Formteil gemäß einem der Ansprüche 6 bis 10; und
- Ein weiteres Objekt, welches innerhalb der hohlen Innengeometrie des Formteils aufgenommen ist, wobei das weitere Objekt insbesondere innerhalb der hohlen Innengeometrie des Formteils beweglich aufgenommen ist.

12. System gemäß Anspruch 11, wobei das weitere Objekt eine Mantelteilfläche (216) mit einer Konizität mit dem ersten Winkel relativ zu der Ausrückachse aufweist.

13. System gemäß Anspruch 11 oder 12, wobei an dem weiteren Objekt Weichkomponenten angeordnet sind, die zwischen dem weiteren Objekt und dem Formteil verpresst sind.

14. System gemäß einem der Ansprüche 11 bis 13, wobei das weitere Objekt mindestens eine Öffnung aufweist, die in mindestens einer Positionierung relativ zum Formteil an zumindest eine der mindestens einen Ausnehmung, insbesondere eine Durchgangsöffnung, anschließt.

15. System gemäß einem der Ansprüche 11 bis 14, wobei das Formteil ein Ventilgehäuse ist und wobei das weitere Objekt ein Ventileinsatz ist, optional wobei ferner die Weichkomponenten Dichtungselemente sind.
